(19)

Europäisches
Patentamt
European
Patent Office
Office européen
des brevets

(11) **EP 4 729 334 A1**

(12) **EUROPEAN PATENT APPLICATION**

| | |
|---|---|
| (43) Date of publication:<br>**22.04.2026 Bulletin 2026/17** | (51) International Patent Classification (IPC):<br>**B60L 15/20** *(2006.01)* **B60L 15/32** *(2006.01)* |
| (21) Application number: **24206859.1** | (52) Cooperative Patent Classification (CPC):<br>**B60L 15/2045; B60L 15/32;** B60L 2220/42;<br>B60L 2240/423; B60L 2240/425 |
| (22) Date of filing: **16.10.2024** | |

| | |
|---|---|
| (84) Designated Contracting States:<br>**AL AT BE BG CH CY CZ DE DK EE ES FI FR GB<br>GR HR HU IE IS IT LI LT LU LV MC ME MK MT NL<br>NO PL PT RO RS SE SI SK SM TR**<br>Designated Extension States:<br>**BA**<br>Designated Validation States:<br>**GE KH MA MD TN**<br><br>(71) Applicant: **Volvo Truck Corporation<br>405 08 Göteborg (SE)** | (72) Inventors:<br>• **Winblad, Hanna<br>433 62 Sävedalen (SE)**<br>• **Jakobsson, Samuel<br>418 73 Göteborg (SE)**<br><br>(74) Representative: **Valea AB<br>Box 1098<br>405 23 Göteborg (SE)** |

(54) **A COMPUTER SYSTEM COMPRISING PROCESSING CIRCUITRY CONFIGURED TO ISSUE CONTROL DATA FOR CONTROLLING A POWER SYSTEM OF A VEHICLE**

(57) The present disclosure relates to a computer system and a computer-implemented method for issuing control data for controlling a power system (200) of a vehicle (100). The method comprising:

- identifying (S1) a driving event and power demand,

- obtaining (S2) power system operating information, comprising operating temperatures, of each one of the first and second electric motors (201) (202), and determining (S2) a temperature difference indicative of a difference between the first and the second electric motors' operating temperatures,

- in response to the identified power demand being below a power demand threshold level, determining (S3) that a condition for the single-motor operating mode is fulfilled,

- on the basics of the temperature difference, selecting an electric motor amongst the first and second electric motors (201) (202) to be connected to the drive shaft (205) for the single motor operating mode, and

- issuing (S5) the control data to control the power system (200) to be operated under the single-motor operating mode.

100

FIG. 1

EP 4 729 334 A1

**Description**

**TECHNICAL FIELD**

The disclosure relates generally to at least partly electric vehicles. In particular aspects, the disclosure relates to a computer system comprising processing circuitry configured to issue control data for controlling a power system of a vehicle. The disclosure also relates to a computer-implemented method for issuing control data for controlling a power system of a vehicle. Moreover, the disclosure relates to a vehicle, a computer program product and a non-transitory computer-readable storage medium. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

An electric vehicle (EV) is a vehicle that uses one or more electric motors for propulsion. A power system equipped with multiple electric motors may offer enhanced flexibility and efficiency for the electric vehicle. Typically, a transmission can either engage all the motors simultaneously, or one motor individually, with each motor operating at different operating points. When a gear selection strategy is used to determine the most appropriate gear for a vehicle's transmission to be engaged under varying driving conditions, it typically prioritize energy efficiency without considering the health of the power system. As a result, one motor may be overused, accumulating wear and consequently experiencing a reduced lifecycle.

**SUMMARY**

According to a first aspect of the disclosure, a computer system comprising processing circuitry configured to issue control data for controlling a power system of a vehicle is provided. The power system comprises at least a first electric motor and a second electric motor, wherein each one of the first and second electric motors are arranged to be individually or simultaneously connected to a drive shaft for providing propulsion power to the vehicle , wherein the power system can be arranged to be operated in a single-motor operating mode during which one single motor, either the first electric motor or the second electric motor, is connected to the drive shaft. The processing circuitry is further configured to:

- identify a driving event and power demand associated with a required power to be provided by the power system during the driving event,
- obtain power system operating information, comprising operating temperatures, of each one of the first and second electric motors, and determine a temperature difference indicative of a difference between the first and the second electric motors' operating temperatures,
- in response to the identified power demand being below a power demand threshold, determine that a condition for the single-motor operating mode is fulfilled,
- on the basics of the temperature difference, select an electric motor amongst the first and second electric motors to be connected to the drive shaft for the single-motor operating mode, and
- issue the control data to control the power system to be operated under the single-motor operating mode during the driving event.

The first aspect of the disclosure may seek to improve overall health of the power system. Generally, in addition to operating temperatures, various parameters and/or factors may impact the overall health of the electric motors. Instead of simply selecting an electric motor with the lowest temperature, evaluating the temperature difference may allow for more flexible and adaptive decision-making for the single-motor operating mode. For instance, when the temperature difference is minor, for instance, when the difference is below 5%, it may suggest that both the electric motors may perform similarly in terms of thermal load. In this case, other critical parameters may need to be prioritized. A technical benefit may include that it may ensure a comprehensive evaluation, leading to improved overall health of the power system.

Optionally in some examples, comprising in at least one preferred example, the power system operating information further comprises efficiency information, associated with an efficiency in terms of converting an electric power to a mechanical power, for each one of the first and second electric motors. The processing circuitry is further configured to:

- in response to determining that the temperature difference is below a temperature difference threshold, select the electric motor amongst the first and second electric motors with the highest efficiency to be connected to the drive shaft.

In general, different motors may have different efficiencies as they may be designed to be paired with different gear ratios and may have different efficiency even at the same operational condition. When the temperature difference is minor, for instance, when the temperature difference is below 5%, or when the temperature difference is less than 10°C, it may be advantageous to select an electric motor based on an energy efficiency rather than solely on individual temperature. A technical benefit may include improved energy efficiency of the power system.

Optionally in some examples, comprising in at least one preferred example, the processing circuitry is further configured to:

- in response to determining that the temperature difference is equal or exceeds a temperature difference threshold 1, select the electric motor amongst the first and second electric motors to be connected based on the operating temperatures of each one of the first and second electric motors.

When the temperature difference becomes significant, for instance, when the difference is higher than 5%, or when the temperature difference is more than 10°C , it may be advantageous to select an electric motor based on individual's operating temperature. A technical benefit may include that it may allow for a more appropriate selection that adapts to real-time conditions.

Optionally in some examples, comprising in at least one preferred example, the power system operating information further comprises accumulated load information, associated with a total amount of load that has been applied to the each one of the first and second electric motors. The processing circuitry is further configured to:

- in response to determining that the operation temperatures of each one of first and second electric motors are below a lower temperature limit, select the electric motor amongst the first and second electric motors with the lowest accumulated load to be connected to the drive shaft.

When the operating temperatures of both electric motors are relatively low, it may suggest that both the first and second motors are under low thermal stress condition. In such cases, it may be advantageous to select an electric motor based on the accumulated load. The electric motor with a higher accumulated load may be turned off to recuperate, allowing for balanced usage and extended lifespan of the first and second electric motors.

Optionally in some examples, comprising in at least one preferred example, the processing circuitry is further configured to:

- in response to determining that the operation temperatures of each one of first and second electric motors are within a range between a lower temperature limit and an upper temperature limit, select the electric motor amongst the first and second electric motors with the lowest temperature to be connected to the drive shaft.

In this way, the electric motor with a higher operating temperature may be turned off to cool down. A technical benefit may include that it may distribute thermal load evenly between the first and second motors

Optionally in some examples, comprising in at least one preferred example, the vehicle may further comprise at least one transmission, and wherein each one of the first and second electric motors can be individually or simultaneously connected to a drive shaft via the at least one transmission. The processing circuitry is further configured to:

- issue control data for controlling the at least one transmission to engage a gear such that the selected electric motor amongst the first and second electric motors is drivingly connected to the drive shaft at a start of the driving event.

In this way, an appropriate electric motor may be connected to ensure the overall health of the power system.

Optionally in some examples, comprising in at least one preferred example, the power system can be further arranged to be operated in a multiple-motor operating mode during which each one of the first and the second electric motors are simultaneously connected to the drive shaft. The processing circuitry is further configured to:

- in response to determining that the operation temperatures of each one of first and second electric motors exceed an upper limit, determine that a condition for the single motor operating mode is not fulfilled, and
- issue the control data to switch the power system from single-motor operating mode to multiple-motor operating mode.

When both electric motors are operating at temperatures higher than a critical level, it may be more advantageous to connect and operate both electric motors to meet the required power demand, despite the low power demand. In this way, it may distribute the thermal load more evenly, reducing the thermal stress on each individual electric motor. A technical benefit may include a reduced risk of thermal damage.

Optionally in some examples, comprising in at least one preferred example, the vehicle further comprises at least one transmission, and wherein each one of the first and second electric motors can be individually or simultaneously connected to a drive shaft via the at least one transmission, wherein the processing circuitry is further configured to:

- issue control data for controlling the at least one transmission to engage a gear such that each one of the first and second electric motors are drivingly connected to the drive shaft.

In this way, an appropriate electric motor may be connected to reduce a risk of thermal damages on the electric motors.

Optionally in some examples, comprising in at least one preferred example, the processing circuitry is further configured to:

- obtain driving condition information comprising at least one of the following: a position of an acceleration pedal, an opening degree of a throttle, or a set speed of a cruise control system, and
- determine the power demand based on the driving condition information.

According to a second aspect of the disclosure, a vehicle is provided. The vehicle comprises a power system comprising at least a first electric motor and a second electric motor, wherein each one of the first and second electric motors are arranged to be individually or simultaneously connected to a drive shaft for providing propulsion power to the vehicle. The vehicle further comprises the computer system according to the first aspect of the disclosure. Technical benefits of the second aspect of the disclosure are largely analogous to the technical benefit of the first aspect of the disclosure. It shall also be noted that all examples of the second aspect of the disclosure are applicable to and/or combinable with all examples of the first aspect of the disclosure, and vice versa.

According to a third aspect of the disclosure, a computer-implemented method for issuing control data for controlling a power system of a vehicle is provided. The power system comprises at least a first electric motor and a second electric motor, wherein each one of the first and second electric motors are arranged to be individually or simultaneously connected to a drive shaft for providing propulsion power to the vehicle, wherein the power system can be arranged to be operated in a single-motor operating mode during which one single motor, either the first electric motor or the second electric motor, is connected to the drive shaft. The method comprises:

- identifying, by processing circuitry of a computer system, a driving event and power demand associated with a required power to be provided by the power system during the driving event,
- obtaining, by the processing circuitry, power system operating information, comprising operating temperatures, of each one of the first and second electric motors, and determining a temperature difference indicative of a difference between the first and the second electric motors' operating temperatures,
- in response to the identified power demand being below a power demand threshold level, determining, by the processing circuitry, that a condition for the single-motor operating mode is fulfilled,
- on the basics of the temperature difference, selecting, by the processing circuitry, an electric motor amongst the first and second electric motors to be connected to the drive shaft for the single motor operating mode, and
- issuing, by the processing circuitry, the control data to control the power system to be operated under the single-motor operating mode during the driving event.

Technical benefits of the third aspect of the disclosure are largely analogous to the technical benefit of the first aspect of the disclosure. It shall also be noted that all examples of the third aspect of the disclosure are applicable to and/or combinable with all examples of the first aspect of the disclosure, and vice versa.

Optionally in some examples, comprising in at least one preferred example, the power system operating information further comprises efficiency information, associated with an efficiency in terms of converting an electric power to a mechanical power, for each one of the first and second electric motors. The method further comprises:

- in response to determining that the temperature difference is below a temperature difference threshold, selecting, by the processing circuitry the electric motor, amongst the first and second electric motors with the highest efficiency to be connected to the drive shaft.

Optionally in some examples, comprising in at least one preferred example, the method further comprises:

- in response to determining that the temperature difference is equal or exceeds a temperature difference threshold level, selecting, by the processing circuitry, the electric motor amongst the first and second electric motors to be connected based on the operating temperatures of each one of the first and second electric motors.

Optionally in some examples, comprising in at least one preferred example, the power system operating information further comprises accumulated load information, associated with a total amount of load that has been applied to the each one of the first and second electric motors. The method further comprises:

- in response to determining that the operation temperatures of each one of first and second electric motors are below a lower temperature limit, selecting, by the processing circuitry, the electric motor amongst the first and second electric motors with the lowest accumulated load to be connected to the drive shaft.

Optionally in some examples, comprising in at least one preferred example, the method further comprises:

- in response to determining that the operation temperatures of each one of first and second electric motors are within a range between a lower temperature limit and an upper temperature limit, selecting, by the processing circuitry, the electric motor amongst the first and second electric motors with the lowest temperature to be connected to the drive shaft.

Optionally in some examples, comprising in at least one preferred example, the vehicle further comprises at least one transmission, and wherein each one of the first and second electric motors can be individually or simultaneously connected to a drive shaft via the at least one transmission. The method further comprises:

- issuing, by the processing circuitry, control data for controlling the at least one transmission to engage a gear such that the selected electric motor amongst the first and second electric motors is drivingly connected to the drive shaft at a start of the driving event.

Optionally in some examples, comprising in at least one preferred example, the power system can be further arranged to be operated in a multiple-motor operating mode during which each one of the first and the second electric motors are simultaneously connected to the drive shaft. The method further comprises:

- in response to determining that the operation temperatures of each one of first and second electric motors exceed an upper limit, determining, by the processing circuitry, that a condition for the single-motor operating mode is not fulfilled, and
- issuing, by the processing circuitry, the control data to switch the power system from single-motor operating mode to multiple-motor operating mode.

Optionally in some examples, comprising in at least one preferred example, the vehicle further comprises at least one transmission, and wherein each one of the first and second electric motors can be individually or simultaneously connected to a drive shaft via the at least one transmission. The method further comprises:

- issuing, by the processing circuitry, control data for controlling the at least one transmission to engage a gear such that each one of the first and second electric motors are drivingly connected to the drive shaft.

Optionally in some examples, comprising in at least one preferred example, the method further comprises:

- obtaining, by the processing circuitry, driving condition information comprising at least one of the following: a position of an acceleration pedal, an opening degree of a throttle, or a set speed of a cruise control system, and
- determining, by the processing circuitry, the power demand based on the driving condition information.

According to a fourth aspect of the disclosure, a computer program product is provided. The computer program product comprises program code for performing, when executed by the processing circuitry, the method according to the third aspect.

According to a fifth aspect of the disclosure, a non-transitory computer-readable storage medium is provided. The non-transitory computer-readable storage medium comprises instructions, which when executed by the processing circuitry, cause the processing circuitry to perform the method according to the third aspect.

The disclosed aspects, examples (comprising any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

**BRIEF DESCRIPTION OF THE DRAWINGS**

Examples are described in more detail below with reference to the appended drawings.

FIG. 1 is an exemplary vehicle of a schematic side view according to an example.
FIG. 2 is an exemplary driveline of a vehicle according to an example.
FIG. 3 - FIG. 5 are exemplary flow charts illustrating actions involved in a method for issuing control data for issuing control data for controlling a power system of a vehicle according to examples.
FIG. 6 is a schematic diagram of an exemplary computer system for implementing methods disclosed herein.

**DETAILED DESCRIPTION**

The detailed description set forth below provides information and examples of the disclosed technology with sufficient detail to enable those skilled in the art to practice the disclosure.

An electric vehicle (EV) is a vehicle that uses one or more electric motors for propulsion. A power system equipped with multiple electric motors may offer enhanced flexibility and efficiency for the electric vehicle. Typically, a transmission can either engage all the motors simultaneously or one motor separately, with each motor operating at different operating points. When a gear selection strategy is used to determine the most appropriate gear for a vehicle's transmission to be engaged under varying driving conditions, it may prioritize energy efficiency without considering the health of the power system. As a result, one motor may be overused, accumulating wear and consequently experiencing a reduced lifecycle. The disclosure may seek to improve overall health or a lifespan of the power system. A technical benefit may include improved health of the power system, leading to a prolonged service life.

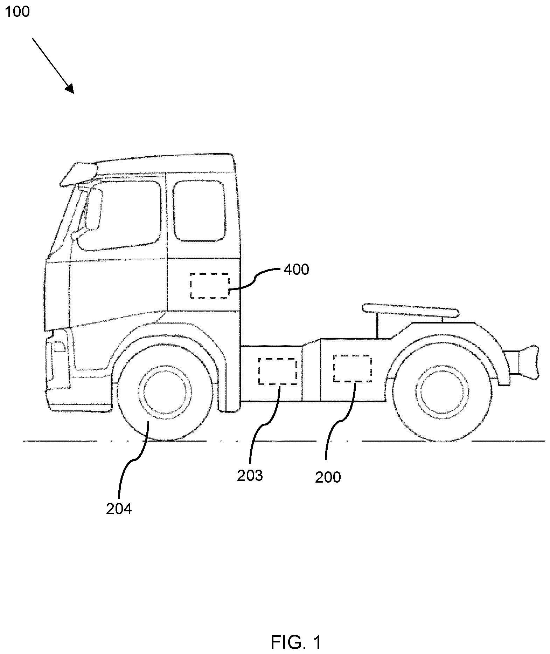

FIG. 1 depicts a vehicle 1, which is exemplified by a truck, preferably an electric truck powered by batteries. Even though a truck is shown, it shall be noted that the disclosure is not limited to this type of vehicle, but it may also be used for other electric vehicles, such as a bus, construction equipment, e.g., a wheel loader, an excavator or a marine vessel. The present disclosure is also applicable for a hybrid vehicle, e.g. a vehicle comprises a combustion engine and an electric engine. Thus, the vehicle is at least partly electrically driven.

The vehicle 1 comprises a power system 200 for providing propulsion power to the vehicle 1 via a transmission 203. The transmission 203 may convert a torque generated from the power system 200 to a torque that is suitable for driving a set of the wheels 204 and transfer the torque to the set of the wheels 204. The transmission 203 may comprise a plurality of gears and may be adapted to individually engage each one of a plurality of gears, as needed. Each one of the gears may correspond to a ratio between a rotational speed of shaft connected to the power system 200 and a shaft connected to the set of wheels 204, and by selecting different gears, the torque transmitted to the wheels 204 can be regulated. As a result, the speed of the vehicle 1 can be controlled.

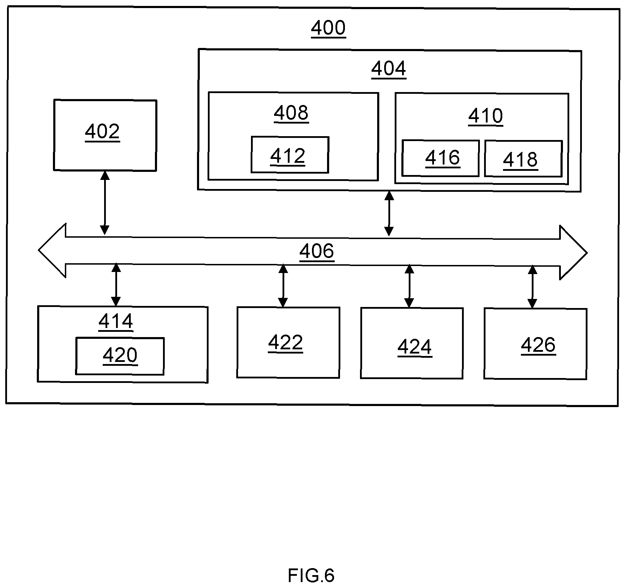

Furthermore, the vehicle 1 comprises a computer system 400, which may comprise one or more control units, such as processing circuitry 402 (see FIG. 6) that can issue control data for controlling the transmission 203. The control unit may be the same as the processing circuitry, the control unit may be comprised in the processing circuitry, or the control unit may comprise the processing circuitry. The computer system 400 may be adapted to communicate with the transmission 203 and also the power system 200. During operation, the computer system 400 may continuously monitor information indicating power demand and driving conditions and send control data for controlling the transmission 203, for instance, to shift gears to maintain the vehicle 1 at an appropriate speed.

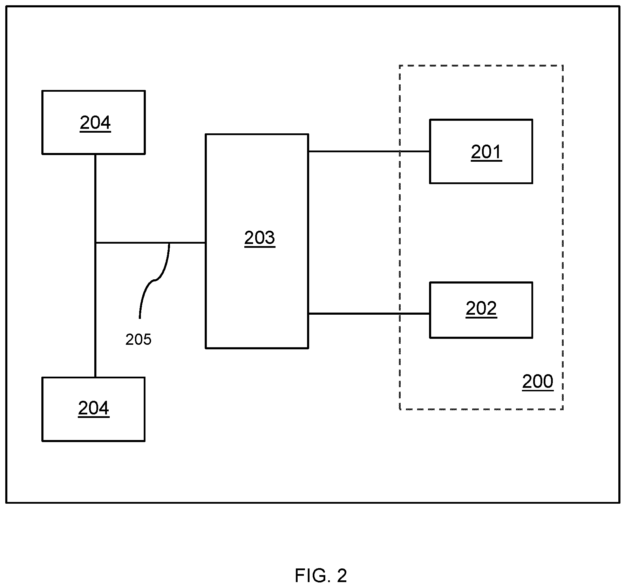

**FIG. 2** shows a driveline of a vehicle, such as the FIG. 1 vehicle. Specifically, the power system 2000 comprises at least a first electric motor 201 and a second electric motor 202, whereby each one of the first and second electric motors 201 202 are arranged to be individually or simultaneously connected to a drive shaft 205, which is connected to the set of wheels 204 via axel shafts 206, for providing propulsion power to the vehicle 100. The power system 200 can be arranged to be operated in a single-motor operating mode during which one single motor, either the first electric motor 201 or the second electric motor 202, is connected to the drive shaft 205. The first electric motor 201 or the second electric motor 202 may be connected to the drive shaft 205 via the transmission 203. For instance, the transmission 203 may comprise a neutral gear in which no gear is engaged, and the first and second electric motors 201 202 may be individually or simultaneously set to the neutral gear. Alternatively, although not depicted by the figure, the vehicle 1 may comprise two transmissions, namely, a first transmission and a second transmission, whereby the first electric motor 201 may be connectable to the drive shaft 205 via the first transmission and the second electric motor 202 may be connectable to the drive shaft 205 via the second transmission. Moreover, the power system 200 may alternatively be arranged to be operated in a multiple-motor operating mode during which each one of the first and the second electric motors are simultaneously connected to the drive shaft 205.

Moreover, each one of the first and second electric motors 201 202 may have its own efficiency curve based on its design and operational point. Herein, the efficiency may refer to the ability to convert electrical power into mechanical power, typically expressed as a ratio of output power to input power. In some examples, the first electric motor 201 may be designed to have a high efficiency at a first operating condition, e.g., a low-speed condition whilst the second electric motor 202 may be designed to have high efficiency at another operating condition being different from the first operating condition, e.g., high-speed condition.

The vehicle 1 may further comprise a plurality of sensors (not shown) configured to monitor operating parameters of each one of the electric motors 201 202. For instance, a dedicated temperature sensor may be arranged to minor temperatures of each one of the electric motors 201 202 during operation. The plurality of sensors may be arranged to provide information indicating the monitored operating parameters to at least one of the processing circuitry 402 and the power system 200.

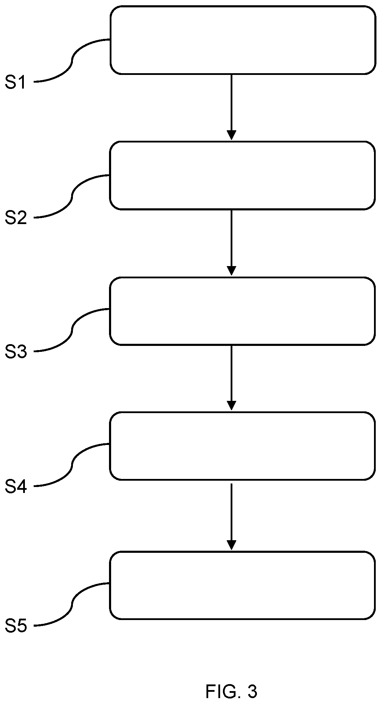

FIG. 3- FIG. 4 illustrate flowcharts of actions involved in a method for???? controlling a power system 200 of a vehicle 100. The method may be performed by processing circuitry of a computer system 400, such as the vehicle onboard computer system 400. The method comprises the actions listed in the following, which, unless otherwise indicated, may be taken in any suitable order.

S 1: identifying a driving event and power demand associated with a required power to be provided by the power system during the driving event.

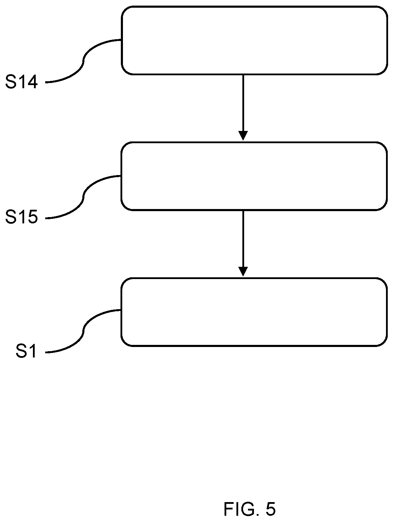

In some examples, the action S1 may comprise additional actions as presented in FIG. 5:

S14: obtaining driving condition information comprising at least one of the following: a position of an acceleration pedal, an opening degree of a throttle, or a set speed of a cruise control system.

S15: determining the power demand based on the driving condition information.

The position of the acceleration pedal may be associated with a degree to which the acceleration pedal is pressed, indicating how much power an operator is requesting. Moreover, the speed that a user has set on the cruise control system may also indicate how much power is required to maintain the vehicle at the set speed. This information may be obtained from any suitable sensors such as a pedal position sensor, a throttle position sensor, or from a cruise control system. By use of the above information, it may be possible to determine how much power the power system 200 needs to deliver. In these examples, the power demand may correspond to a current demand based on the above parameters detected in real-time for a current driving event. In some other examples, the power demand may also be an estimated demand predicted for an upcoming driving event. The upcoming driving event may be identified using GPS or map data.

Turning back to FIG. 3, the method further comprises:

> S2: obtaining power system operating information, comprising operating temperatures, of each one of the first and second electric motors 201 202, and determining a temperature difference indicative of a difference between the first and the second electric motors' operating temperatures. The temperature information may be obtained from the temperature sensors.

> S3: in response to the identified power demand being below a power demand threshold level, determining that a condition for the single-motor operating mode is fulfilled.

Purely by way of example, the threshold may correspond to a power level that can be achieved by a single electric motor. Preferably, this power level may be 90% of a maximum allowable power output from a single electric motor. When the power demand is lower than this threshold level, it may indicate that it is sufficient to use one electric motor to deliver the required power. The power demand threshold may be predetermined, or it may be an adaptive or dynamically set threshold.

S4: on the basics of the temperature difference, selecting an electric motor amongst the first and second electric motors 201 202 to be connected to the drive shaft 205 for the single motor operating mode.

S5: issuing the control data to control the power system 200 to be operated under the single-motor operating mode during the driving event.

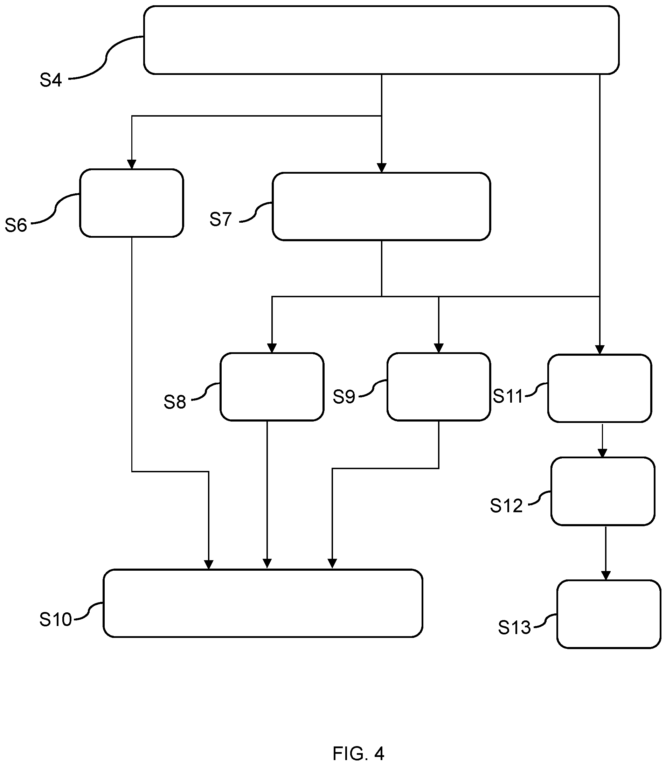

In some examples, the method may further comprise the following actions as presented in FIG. 4.

S6: in response to determining that the temperature difference is below a temperature difference threshold, selecting the electric motor, amongst the first and second electric motors 201 202 with the highest efficiency to be connected to the drive shaft 205. The temperature difference threshold may be predetermined, or it may be an adaptive or dynamically set temperature difference threshold.

When the temperature difference is minor, it may indicate that both the electric motors 201 202 may perform similarly in terms of thermal load, and it may be advantageous to select an electric motor that has the highest energy efficiency at the current operating condition.

S7: in response to determining that the temperature difference is equal or exceeds a temperature difference threshold, selecting the electric motor amongst the first and second electric motors 201 202 to be connected based on the operating temperatures of each one of the first and second electric motors 201 202.

The method may further comprise:
S8: in response to determining that the operation temperatures of each one of first and second electric motors 201 202 are below a lower temperature limit, for instance below 60°C , selecting the electric motor amongst the first and second electric motors 201 202 with the lowest accumulated load to be connected to the drive shaft 205.

Herein, the accumulated load may be associated with a total amount of load that has been applied to the each one of the first and second electric motors 201 202. The accumulated load may be estimated using the below formula:

$$\text{Load}_{\text{acc}} = \sum \frac{\text{Power}}{\text{Power(max)}}$$

where Power refers to a power that an electric motor is producing at a specific time, e.g., a current time instant, and Power(max) is the maximum power output limit of the electric motor.

When the operating temperatures of both electric motors 201 202 are relatively low, it may suggest that both the first and second motors are under low thermal stress condition. In such cases, it may be advantageous to select an electric motor based on the accumulated load. The electric motor with a higher accumulated load may be turned off to recuperate, allowing for balanced usage and extended lifespan of the first and second electric motors.

S9: in response to determining that the operation temperatures of each one of first and second electric motors 201 202 are within a range between a lower temperature limit, e.g., 60°C, and an upper temperature limit, e.g., 100°C selecting the electric motor amongst the first and second electric motors 201 202 with the lowest temperature to be connected to the drive shaft 205.

In this way, the electric motor with a higher operating temperature may be turned off to cool down.

S10: issuing control data for controlling the at least one transmission 203 to engage a gear such that the selected electric motor amongst the first and second electric motors 201 202 is drivingly connected to the drive shaft 205 at a start of the driving event.

In some examples, the method may further comprise the following actions:

> S11: in response to determining that the operation temperatures of each one of first and second electric motors 201 202 exceed an upper limit, e.g., 100°C, determining that a condition for the single motor operating mode is not fulfilled,

S 12: issuing the control data to switch the power system 200 from single-motor operating mode to multiple-motor operating mode, and

S 13: issuing, control data for controlling the at least one transmission 203 to engage a gear such that each one of the first and second electric motors 201 202 are drivingly connected to the drive shaft 205.

When both electric motors 201 202 are operating at temperatures higher than a critical level, it may be more advantageous to connect and operate both electric motors 201 202 to meet the required power demand, despite the low power demand. In this way, it may distribute the thermal load more evenly, reducing the thermal stress on each individual electric motor.

Although the power system is exemplified by a dual-motor configuration and the method is exemplified by controlling a dual-motor system, the power system 200 may comprise more than two electric motors. It can use similar principles to control such a power system.

**FIG 6.** illustrates a computer system 400 for performing the method. Computer system 400 is adapted to execute instructions from a computer-readable medium to perform these and/or any of the functions or processing described herein. The computer system 400 may be connected e.g., networked) to other machines in a LAN, an intranet, an extranet, or the Internet. While only a single device is illustrated, the computer system 400 may include any collection of devices that individually or jointly execute a set or multiple sets of instructions to perform any one or more of the methodologies discussed herein. Accordingly, any reference in the disclosure and/or claims to a computer system, computing system, computer device, computing device, control system, control unit, electronic control unit ECU, processor device, processing circuitry, etc., includes reference to one or more such devices to individually or jointly execute a set or multiple sets) of instructions to perform any one or more of the methodologies discussed herein. For example, the control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network CAN bus, etc.

The computer system 400 may comprise at least one computing device or electronic device capable of comprising firmware, hardware, and/or executing software instructions to implement the functionality described herein. The computer system 400 may include processing circuitry **402** e.g., processing circuitry comprising one or more processor devices or control units), a memory **404,** and a system bus **406.** The computer system **400** may include at least one computing device having the processing circuitry **402.** The system bus **406** provides an interface for system components comprising, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor DSP, an Application Specific Integrated Circuit ASIC, a Field Programmable Gate Array FPGA, a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus with or without a memory controller, a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** e.g., via a circuit or any other wired, wireless, or network connection) and may include computer code for executing one or more processes described herein. The memory **404** may include non-volatile memory **408** e.g., read-only memory ROM), erasable programmable read-only memory EPROM, electrically erasable programmable read-only memory EEPROM, etc., and volatile memory **410** e.g., random-access memory RAM)), or any other medium which can be used to carry or store desired program code in the form of machine-executable instructions or data structures and which can be accessed by a computer or other machine with processing circuitry **402.** A basic input/output system BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive HDD) e.g., enhanced integrated drive electronics EIDE or serial advanced technology attachment SATA, HDD e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The modules can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium e.g., single medium or multiple media), such as the storage device **414,** which includes complex programming instructions e.g., complex computer-readable program code to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product e.g., readable storage medium storing the computer program **420** thereon, where at least a portion of a computer program **420** may be loadable e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers IEEE 1394 serial port, a Universal Serial Bus USB) port, an IR interface, and the like. The computer system **400** may include an output device interface **424** configured to forward output, such as to a display, a video display unit e.g., a liquid crystal display LCD or a cathode ray tube CRT. The computer system **400** may include a communications interface **426** suitable for communicating with a network as appropriate or desired.

Moreover, the present disclosure may be exemplified by any one of the below examples and combination of examples.

Example 1: A computer system (400) comprising processing circuitry (402) configured to issue control data for controlling a power system (200) of a vehicle (100), the power system (200) comprising at least a first electric motor (201) and a second electric motor (202), wherein each one of the first and second electric motors (201) (202) are arranged to be individually or simultaneously connected to a drive shaft (205) for providing propulsion power to the vehicle (100) , wherein the power system (200) can be arranged to be operated in a single-motor operating mode during which one single motor, either the first electric motor (201) or the second electric motor (202), is connected to the drive shaft (205), the processing circuitry (402) being further configured to:

- identify a driving event and power demand associated with a required power to be provided by the power system (200) during the driving event,
- obtain power system operating information, comprising operating temperatures, of each one of the first and second electric motors (201) (202), and determine a temperature difference indicative of a difference between the first and the second electric motors' operating temperatures,
- in response to the identified power demand being below a power demand threshold, determine that a condition for the single-motor operating mode is fulfilled,
- on the basics of the temperature difference, select an electric motor amongst the first and second electric motors (201) (202) to be connected to the drive shaft (205) for the single motor operating mode, and
- issue the control data to control the power system (200) to be operated under the single-motor operating mode during the driving event.

Example 2: The computer system (400) of example 1, wherein the power system (200) operating information further comprises efficiency information, associated with an efficiency in terms of converting an electric power to a mechanical power, for each one of the first and second electric motors (201) (202), wherein the processing circuitry (402) is further configured to:

- in response to determining that the temperature difference is below a temperature difference threshold, select the electric motor amongst the first and second electric motors (201) (202) with the highest efficiency to be connected to the drive shaft (205).

Example 3: The computer system (400) of any one of examples 1-2, wherein the processing circuitry (402) is further configured to:

- in response to determining that the temperature difference is equal or exceeds a temperature difference threshold level, select the electric motor amongst the first and second electric motors (201) (202) to be connected based on the operating temperatures of each one of the first and second electric motors (201) (202).

Example 4: The computer system (400) of example 3, wherein the power system operating information further comprises accumulated load information, associated with a total amount of load that has been applied to the each one of the first and second electric motors (201) (202), wherein the processing circuitry (402) is further configured to:

- in response to determining that the operation temperatures of each one of first and second electric motors (201) (202) are below a lower temperature limit, select the electric motor amongst the first and second electric motors (201) (202) with the lowest accumulated load to be connected to the drive shaft (205).

Example 5: The computer system (400) of any one of examples 3-4, wherein the processing circuitry (402) is further configured to:

- in response to determining that the operation temperatures of each one of first and second electric motors (201) (202) are within a range between a lower temperature limit and an upper temperature limit, select the electric motor amongst the first and second electric motors (201) (202) with the lowest temperature to be connected to the drive shaft (205).

Example 6: The computer system (400) of any one of examples 2-5, wherein the vehicle (100) further comprises at least one transmission (203), and wherein each one of the first and second electric motors (201) (202) can be individually or simultaneously connected to a drive shaft (205) via the at least one transmission (203), wherein the processing circuitry (402) is further configured to:

- issue control data for controlling the at least one transmission (203) to engage a gear such that the selected electric motor amongst the first and second electric motors (201) (202) is drivingly connected to the drive shaft (205) at a start of the driving event.

Example 7 The computer system (400) of any one of examples 1-5, wherein the power system (200) can be further arranged to be operated in a multiple- motor operating mode during which each one of the first and the second electric motors are simultaneously connected to the drive shaft (205), the processing circuitry (402) is further configured to:

- in response to determining that the operation temperatures of each one of first and second electric motors (201) (202) exceed an upper limit, determine that a condition for the single motor operating mode is not fulfilled, and
- issue the control data to switch the power system (200) from single-motor operating mode to multiple-motor operating mode.

Example 8: The computer system (400) of example 7, wherein the vehicle (100) further comprises at least one transmission (203), and wherein each one of the first and second electric motors (201) (202) can be individually or simultaneously connected to a drive shaft (205) via the at least one transmission (203), wherein the processing circuitry (402) is further configured to:

- issue control data for controlling the at least one transmission (203) to engage a gear such that each one of the first and second electric motors (201) (202) are drivingly connected to the drive shaft (205).

Example 9: The computer system (400) of any one of the preceding examples, wherein the processing circuitry (402) is further configured to:

- obtain driving condition information comprising at least one of the following: a position of an acceleration pedal, an opening degree of a throttle, or a set speed of a cruise control system, and
- determine the power demand based on the driving condition information.

Example 10: A vehicle (100) comprising a power system, the power system (200) comprising at least a first electric motor (201) and a second electric motor, wherein each one of the first and second electric motors (201) (202) are arranged to be individually or simultaneously connected to a drive shaft (205) for providing propulsion power to the vehicle (100), the vehicle (100) further comprising the computer system (400) of any of examples 1-9.

Example 11: A computer-implemented method for issuing control data for controlling a power system (200) of a vehicle (100), the power system (200) comprising at least a first electric motor (201) and a second electric motor, wherein each one of the first and second electric motors (201) (202) are arranged to be individually or simultaneously connected to a drive shaft (205) for providing propulsion power to the vehicle (100) , wherein the power system (200) can be arranged to be operated in a single-motor operating mode during which one single motor, either the first electric motor (201) or the second electric motor (202), is connected to the drive shaft (205), the method comprising:

- identifying (S1), by processing circuitry (402) of a computer system (400), a driving event and power demand associated with a required power to be provided by the power system (200) during the driving event,
- obtaining (S2), by the processing circuitry (402), power system operating information, comprising operating temperatures, of each one of the first and second electric motors (201) (202), and determining (S2) a temperature difference indicative of a difference between the first and the second electric motors' operating temperatures,
- in response to the identified power demand being below a power demand threshold level, determining (S3), by the processing circuitry (402), that a condition for the single-motor operating mode is fulfilled,
- on the basics of the temperature difference , selecting (S4), by the processing circuitry (402), an electric motor amongst the first and second electric motors (201) (202) to be connected to the drive shaft (205) for the single motor operating mode, and
- issuing (S5), by the processing circuitry (402), the control data to control the power system (200) to be operated under the single-motor operating mode during the driving event.

Example 12: The method of example 11, wherein the power system operating information further comprises efficiency information, associated with an efficiency in terms of converting an electric power to a mechanical power, for each one of the first and second electric motors (201) (202), wherein the method further comprises:

- in response to determining that the temperature difference is below a temperature difference threshold, selecting (S6), by the processing circuitry (402) the electric motor, amongst the first and second electric motors (201) (202) with the highest efficiency to be connected to the drive shaft (205).

Example 13: The method of any one of examples 11-12, further comprising:

- in response to determining that the temperature difference is equal or exceeds a temperature difference threshold level, selecting (S7), by the processing circuitry (402), the electric motor

amongst the first and second electric motors (201) (202) to be connected based on the operating temperatures of each one of the first and second electric motors (201) (202).

Example 14: The method of example 13, wherein the power system operating information further comprises accumulated load information, associated with a total amount of load that has been applied to the each one of the first and second electric motors (201) (202), wherein the method further comprises:

- in response to determining that the operation temperatures of each one of first and second electric motors (201) (202) are below a lower temperature limit, selecting (S8), by the processing circuitry (402), the electric motor amongst the first and second electric motors (201) (202) with the lowest accumulated load to be connected to the drive shaft (205).

Example 15: The method of any one of examples 13-14, further comprising:

- in response to determining that the operation temperatures of each one of first and second electric motors (201) (202) are within a range between a lower temperature limit and an upper temperature limit, selecting (S9), by the processing circuitry (402), the electric motor amongst the first and second electric motors (201) (202) with the lowest temperature to be connected to the drive shaft (205).

Example 16: The method of any one of examples 12-15, wherein the vehicle (100) further comprises at least one transmission (203), and wherein each one of the first and second electric motors (201) (202) can be individually or simultaneously connected to a drive shaft (205) via the at least one transmission (203), wherein the method further comprises:

- issuing (S10), by the processing circuitry (402), control data for controlling the at least one transmission (203) to engage a gear such that the selected electric motor amongst the first and second electric motors (201) (202) is drivingly connected to the drive shaft (205) at a start of the driving event.

Example 17: The method of any one of examples 11-15, wherein the power system (200) can further be arranged in a multiple-motor operating mode during which each one of the first and the second electric motors are simultaneously connected to the drive shaft (205), the method further comprises:

- in response to determining that the operation temperatures of each one of first and second electric motors (201) (202) exceed an upper limit, determining (S11), by the processing circuitry (402), that a condition for the single motor operating mode is not fulfilled, and

- issuing (S12), by the processing circuitry (402), the control data to switch the power system (200) from single-motor operating mode to multiple-motor operating mode.

Example 18: The method of example 17, wherein the vehicle (100) further comprises at least one transmission (203), and wherein each one of the first and second electric motors (201) (202) can be individually or simultaneously connected to a drive shaft (205) via the at least one transmission (203), wherein the method further comprises:

- issuing (S13), by the processing circuitry (402), control data for controlling the at least one transmission (203) to engage a gear such that each one of the first and second electric motors (201) (202) are drivingly connected to the drive shaft (205).

Example 19: The method of any one of examples 11-18, further comprising:

- obtaining (S14), by the processing circuitry (402), driving condition information comprising at least one of the following: a position of an acceleration pedal, an opening degree of a throttle, or a set speed of a cruise control system, and
- determining (S15), by the processing circuitry (402), the power demand based on the driving condition information.

Example 20: A computer program product comprising program code for performing, when executed by the processing circuitry (402), the method of any of examples 11-19.

Example 21: A non-transitory computer-readable storage medium comprising instructions, which when executed by the processing circuitry (402), cause the processing circuitry (402) to perform the method of any of examples 11-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (400) comprising processing circuitry (402) configured to issue control data for controlling a power system (200) of a vehicle (100), the power system (200) comprising at least a first electric motor (201) and a second electric motor (202), wherein each one of the first and second electric motors (201) (202) are arranged to be individually or simultaneously connected to a drive shaft (205) for providing propulsion power to the vehicle (100) , wherein the power system (200) can be arranged to be operated in a single-motor operating mode during which one single motor, either the first electric motor (201) or the second electric motor (202), is connected to the drive shaft (205), the processing circuitry (402) being further configured to:

- identify a driving event and power demand associated with a required power to be provided by the power system (200) during the driving event,
- obtain power system operating information, comprising operating temperatures, of each one of the first and second electric motors (201) (202), and determine a temperature difference indicative of a difference between the first and the second electric motors' operating temperatures,
- in response to the identified power demand being below a power demand threshold, determine that a condition for the single-motor operating mode is fulfilled,
- on the basics of the temperature difference, select an electric motor amongst the first and second electric motors (201) (202) to be connected to the drive shaft (205) for the single motor operating mode, and
- issue the control data to control the power system (200) to be operated under the single-motor operating mode during the driving event.

2. A vehicle (100) comprising a power system, the power system (200) comprising at least a first electric motor (201)and a second electric motor, wherein each one of the first and second electric motors (201) (202) are arranged to be individually or simultaneously connected to a drive shaft (205) for providing propulsion power to the vehicle (100) , the vehicle (100) further comprising the computer system (400) of claim 1.

3. The vehicle (100) of claim 2, further comprising at least one transmission (203) through which the first and second electric motors (201) (202) can be arranged to be individually or simultaneously connected to a drive shaft (205).

4. A computer-implemented method for issuing control data for controlling a power system (200) of a vehicle (100) , the power system (200) comprising at least a first electric motor (201)and a second electric motor, wherein each one of the first and second electric motors (201) (202) are arranged to be individually or simultaneously connected to a drive shaft (205) for providing propulsion power to the vehicle (100) , wherein the power system (200) can be arranged to be operated in a single-motor operating mode during which one single motor, either the first electric motor (201) or the second electric motor (202), is connected to the drive shaft (205), the method comprising:

- identifying (S1), by processing circuitry (402) of a computer system (400), a driving event and power demand associated with a required power to be provided by the power system (200) during the driving event,
- obtaining (S2), by the processing circuitry (402), power system operating information, comprising operating temperatures, of each one of the first and second electric motors (201) (202), and determining (S2) a temperature difference indicative of a difference between the first and the second electric motors' operating temperatures,
- in response to the identified power demand being below a power demand threshold level, determining (S3), by the processing circuitry (402), that a condition for the single-motor operating mode is fulfilled,
- on the basics of the temperature difference, selecting (S4), by the processing circuitry (402), an electric motor amongst the first and second electric motors (201) (202) to be connected to the drive shaft (205) for the single motor operating mode, and
- issuing (S5), by the processing circuitry (402), the control data to control the power system (200) to be operated under the single-motor operating mode during the driving event.

5. The method of claim 4, wherein the power system operating information further comprises efficiency information, associated with an efficiency in terms of converting an electric power to a mechanical power, for each one of the first and second electric motors (201) (202), wherein the method further comprises:

- in response to determining that the temperature difference is below a temperature difference threshold, selecting (S6), by the processing circuitry (402) the electric motor, amongst the first and second electric motors (201) (202) with the highest efficiency to be connected to the drive shaft (205).

6. The method of any one of claims 4-5, further comprising:

- in response to determining that the temperature difference is equal or exceeds a temperature difference threshold level, selecting (S7), by the processing circuitry (402), the electric motor amongst the first and second electric motors

(201) (202) to be connected based on the operating temperatures of each one of the first and second electric motors (201) (202).

7. The method of claim 6, wherein the power system operating information further comprises accumulated load information, associated with a total amount of load that has been applied to the each one of the first and second electric motors (201) (202), wherein the method further comprises:

- in response to determining that the operation temperatures of each one of first and second electric motors (201) (202) are below a lower temperature limit, selecting (S8), by the processing circuitry (402), the electric motor amongst the first and second electric motors (201) (202) with the lowest accumulated load to be connected to the drive shaft (205).

8. The method of any one of claims 6-7, further comprising:

- in response to determining that the operation temperatures of each one of first and second electric motors (201) (202) are within a range between a lower temperature limit and an upper temperature limit, selecting (S9), by the processing circuitry (402), the electric motor amongst the first and second electric motors (201) (202) with the lowest temperature to be connected to the drive shaft (205).

9. The method of any one of claims 4-8, wherein the vehicle (100) further comprises at least one transmission (203), and wherein each one of the first and second electric motors (201) (202) can be individually or simultaneously connected to a drive shaft (205) via the at least one transmission (203), wherein the method further comprises:

- issuing (S10), by the processing circuitry (402), control data for controlling the at least one transmission (203) to engage a gear such that the selected electric motor amongst the first and second electric motors (201) (202) is drivingly connected to the drive shaft (205) at a start of the driving event.

10. The method of any one of claims 4-9, wherein the power system (200) can further be arranged to be operated in a multiple-motor operating mode during which each one of the first and the second electric motors are simultaneously connected to the drive shaft (205), the method further comprises:

- in response to determining that the operation temperatures of each one of first and second electric motors (201) (202) exceed an upper limit, determining (S11), by the processing circuitry (402), that a condition for the single motor operating mode is not fulfilled, and
- issuing (S12), by the processing circuitry (402), the control data to switch the power system (200) from single-motor operating mode to multiple-motor operating mode.

11. The method of claim 10, wherein the vehicle (100) further comprises at least one transmission (203), and wherein each one of the first and second electric motors (201) (202) can be individually or simultaneously connected to a drive shaft (205) via the at least one transmission (203), wherein the method further comprises:

- issuing (S13), by the processing circuitry (402), control data for controlling the at least one transmission (203) to engage a gear such that each one of the first and second electric motors (201) (202) are drivingly connected to the drive shaft (205).

12. The method of any one of claims 4-11, further comprising:

- obtaining (S14), by the processing circuitry (402), driving condition information comprising at least one of the following: a position of an acceleration pedal, an opening degree of a throttle, or a set speed of a cruise control system, and
- determining (S15), by the processing circuitry (402), the power demand based on the driving condition information.

13. A computer program product comprising program code for performing, when executed by the processing circuitry (402), the method of any of claims 4-12.

14. A non-transitory computer-readable storage medium comprising instructions, which when executed by the processing circuitry (402), cause the processing circuitry (402) to perform the method of any of claims 4-12.

FIG. 1

FIG. 2

FIG. 3

FIG. 4

FIG. 5

FIG.6

Europäisches
Patentamt
European
Patent Office
Office européen
des brevets

# EUROPEAN SEARCH REPORT

**Application Number**

EP 24 20 6859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/126700 A1 (EITZER ARLO [US]) 28 April 2022 (2022-04-28) * paragraph [0020] - paragraph [0096]; figures 1-8 * | 1-14 | INV. B60L15/20 B60L15/32 |
| A | US 2019/092188 A1 (PLIANOS ALEX [GB] ET AL) 28 March 2019 (2019-03-28) * paragraph [0081] - paragraph [0113]; figures 1-6 * | 1-14 | |

| TECHNICAL FIELDS SEARCHED (IPC) |
|---|
| B60L |

The present search report has been drawn up for all claims

| Place of search | Date of completion of the search | Examiner |
|---|---|---|
| The Hague | 27 March 2025 | Altuntas, Mehmet |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 6859

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2025

| Patent document cited in search report | Publication date | Patent family member(s) | Publication date |
|---|---|---|---|
| US 2022126700 A1 | 28-04-2022 | NONE | |
| US 2019092188 A1 | 28-03-2019 | DE 102018215862 A1 | 28-03-2019 |
| | | GB 2566962 A | 03-04-2019 |
| | | US 2019092188 A1 | 28-03-2019 |

EPO FORM P0459

For more details about this annex : see Official Journal of the European Patent Office, No. 12/82